(19) **Europäisches Patentamt**

**European Patent Office**

**Office européen des brevets**

(11) **EP 1 002 701 A2**

(12) **EUROPÄISCHE PATENTANMELDUNG**

(43) Veröffentlichungstag:
24.05.2000 Patentblatt 2000/21

(51) Int. Cl.⁷: **B60R 21/01**

(21) Anmeldenummer: **99120682.2**

(22) Anmeldetag: **19.10.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **19.11.1998 DE 19853409**

(71) Anmelder:
**Bayerische Motoren Werke Aktiengesellschaft
80809 München (DE)**

(72) Erfinder:
- **Foith, Petra**
  **83236 Übersee (DE)**
- **Bachmaier, Peter**
  **85777 Grossnöbach (DE)**
- **Peller, Martin**
  **82256 Fürstenfeldbruck (DE)**
- **Kuhn, Andreas**
  **80807 München (DE)**
- **Holzner, Michael, Dr.**
  **85567 Grafing (DE)**

(54) **Verfahren zum Erkennen der Schwere eines Fahrzeugzusammenstosses**

(57) Bei einem Verfahren zum Bestimmen der Schwere und des Verlaufs eines Fahrzeugzusammenstoßes, mit mehreren Crash-Sensoren, die an verschiedenen Stellen des Fahrzeugs angeordnet sind und deren Ausgangssignale einer Auswerteeinheit zugeführt werden, werden die Ausgangssignale der Crash-Sensoren auf ein Koordinatensystem bezogen, das bzgl. des Fahrzeugs invariabel ist. Aus den Ausgangssignalen werden Aussagen über die Bewegung der Sensororte bzgl. des Koordinatensystems gewonnen.

Fig.1: Relatives, fahrzeugfestes Koordinatensystem

**Beschreibung**

Die Erfindung bezieht sich auf ein Verfahren mit den Merkmalen des Oberbegriffs von Patentanspruch 1.

Ein derartiges Verfahren ist heutzutage weitverbreitet. Dabei werden die Ausgangssignale eines zentralen Beschleunigungssensors und weiterer, vorzugsweise bei den Sitzquerträgern angeordneter Crashsensoren der Auswerteeinheit zugeführt. Verbunden mit dem Trend, immer mehr Sicherheitseinrichtungen wie Airbags, Gurtstraffer usw. in einem Fahrzeug anzuordnen wächst das Bedürfnis, diese Einrichtungen bedarfsgercht zu steuern. Das bedeutet aber auch, daß häufig nur einzelne Einrichtungen ausgelöst werden, während die übrigen unverändert bleiben. Hierzu werden gehäuft weitere Crashsensoren an verschieden(st)en Stellen des Fahrzeugs angeordnet, um möglichst genau und direkt ein Crashgeschehen verfolgen zu können.

Mit der Zahl der Crashsensoren aber steigt das Problem, die Sensorsignale richtig interpretieren zu können. Aus der US 5,583,771 ist es bekannt, das Ausgangssignal eines einzigen Beschleunigungssensor über einen definierten Zeitraum hinsichtlich seines Verlaufs zu speichern und aus dem Signalverlauf eine Reihe von Informationen wie Amplitude, Geschwindigkeitsverlauf usw. zu bestimmen. Diese Informationen werden als Eingangsinformationen in das neuronale Netz eingegeben, das allein darüber entscheidet, ob ein einziger Airbag gezündet wird.

Werden mehrere Crashsensoren verwendet, lassen sich deren Ausgangssignale in entsprechender Weise mit einem neuronalen Netz nicht hinreichend genau analysieren. Hinzu kommt die Richtungsabhängigkeit von Beschleunigungssensoren. Ist der Beschleunigungssensor beispielsweise in der Lage, einen Frontalcrash zu erkennen, kann ein Seitencrash dann in der Regel nicht oder zumindest nicht mit derselben Genauigkeit detektiert werden. Ein derart einziger Beschleunigungssensor ist in der Regel zentral im Fahrzeug angeordnet. Bedingt durch die Fahrzeugstruktur erfolgt die Verzögerung am Ort des Beschleunigungssensors nur verzögert und in ihrem Verlauf völlig verschieden von dem Verlauf, wie sie beispielsweise am Auftreffort eines Hindernisses erfolgt. Dies führt in der Regel zu erheblichen Problemen, die Schwere des Fahrzeugzusammenstoßes tatsächlich mit hinreichender Präzision zu erkennen.

Der Erfindung liegt die Aufgabe zugrunde, ein Verfahren der eingangs genannten Art zu schaffen, das eine wesentlich bessere Aussage über einen Fahrzeugzusammenstoß liefert.

Die Erfindung löst diese Aufgabe durch die Merkmale des Patentanspruchs 1.

Durch die Vielzahl von Crash-Sensoren, beispielsweise insgesamt deren acht, läßt sich nicht nur eine Aussage über die Schwere, sondern auch über den Verlauf des Fahrzeugzusammenstoßes gewinnen, sofern deren Ausgangssignale auf ein fahrzeugfestes Koordinatensystem bezogen werden.

Damit ergibt sich insgesamt ein Verfahren, das es mit geringem Aufwand ermöglicht, schnell und sicher Aussagen über die Schwere und den Verlauf eines Fahrzeugzusammenstoßes zu liefern und Insassenschutzeinrichtungen bedarfsgerecht anzusteuern.

Um die Vielzahl der auftretenden Sensorsignale besser interpretieren und weiterverarbeiten zu können, ist es auch vorteilhaft, auftretende Beschleunigungssignale mehrfach zu integrieren, um so die resultierenden Geschwindigkeiten und Verschiebungen in dem relativen, fahrzeugfesten Koordinatensystem darzustellen. Die mathematisch/physikalischen Grundlagen hierfür sind nachfolgend angegeben.

Es sei *{x, y}* ein fahrzeugfestes, relatives Koordinatensystem. Die Position des Fahrzeugs ist durch den Nullpunkt

$$r_0 = r_0(t)$$

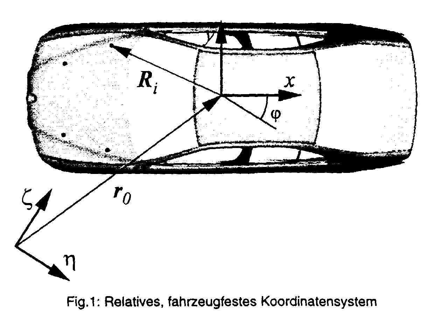

des Koordinatensystems in einem Inertialsystem $\{\eta, \zeta\}$ und die Verdrehung $\varphi = \varphi(t)$ gegeben. Die Lage des Inertialsystems ist beliebig, sie ist am Schluß nicht mehr in den Formeln enthalten. Jeder Punkt des Autos läßt sich dann absolut mit diesem Nullpunkt, der Verdrehung und seinen relativen Fahrzeugkoordinaten **R** beschreiben (Fig. 1):

$$r_{abs} = r_0 + B\boldsymbol{R} \tag{1}$$

wobei die Matrix B die Verdrehung des Relativsystems bezüglich des Inertialsystems angibt:

$$B = \begin{pmatrix} \cos\varphi & -\sin\varphi \\ \sin\varphi & \cos\varphi \end{pmatrix} \tag{2}$$

Im folgenden ist die Notation so gewählt, daß Vektoren fett gedruckt sind, daß sich groß geschriebene Vektoren auf das Relativsystem und klein geschriebene Vektoren auf das Inertialsystem beziehen.

Die Geschwindigkeiten ergeben sich durch Differentiation von (1):

$$v_{abs} = v_0 + \dot{B}R + B\dot{R} \qquad (3)$$

Im Normalfall bleibt das Auto während der Fahrt undeformiert. Die Relativgeschwindigkeit verschwindet:

$$v_{soll} = v_0 + \dot{B}R \qquad (4)$$

Nur während eines Unfalls tritt eine Relativbewegung

$$v_{abs} - v_{soll} \neq 0$$

auf. Diese ist gegeben durch

$$V = \dot{R} = B^{-1}v_{abs} - V_0 - B^{-1}\dot{B}R$$

$$= V_{abs} - V_0 - \dot{\varphi}\begin{pmatrix} 0 & -1 \\ 1 & 0 \end{pmatrix}V_{abs} \qquad (5)$$

Mit Hilfe der nachfolgend angegegebenen Werten für $V_0$, $\varphi$ und $R$ ergibt sich die Geschwindigkeit von Beschleunigungssensoren in dem relativen, fahrzeugfesten Koordinatensystem. Auf gleiche Weise können relative Verschiebungen gewonnen werden.

Idealerweise könnte $V_0$ und $\dot{\varphi}$ in (5) von fahrdynamischen Regelungssystemen zur Verfügung gestellt werden.

Eine alternative Möglichkeit zur Ermittlung der Bewegung des Relativsystems bildet die Integration der Beschleunigungssignale.

Kennt man die Absolutgeschwindigkeiten $V_1$ und $V_2$ von zwei Sensoren, von denen angenommen wird, daß sie keine Relativbewegung zueinander ausführen, und setzt diese in Gleichung (5) für $V$ ein, ergeben sich 4 skalare Gleichungen für die 3 Unbekannten $\dot{\varphi}$, $V_{\{0,x\}}$, $V_{\{0,y\}}$

$$V_{1,x} = V_{0,x} - \dot{\varphi}R_{1,y}$$

$$V_{1,y} = V_{0,y} - \dot{\varphi}R_{1,x}$$

$$V_{2,x} = V_{0,x} - \dot{\varphi}R_{2,y}$$

$$V_{2,y} = V_{0,y} - \dot{\varphi}R_{2,x}$$

Durch Auflösen einer der Gleichungen erhält man

$$\begin{pmatrix} V_{0,x} \\ V_{0,y} \\ \dot{\varphi} \end{pmatrix} = \frac{1}{R_{2,y} - R_{1,y}} \begin{pmatrix} R_{2,y} & 0 & -R_{1,y} \\ -R_{1,x} & R_{2,y} - R_{1,y} & R_{1,x} \\ 1 & 0 & -1 \end{pmatrix} \begin{pmatrix} V_{1,x} \\ V_{1,y} \\ V_{2,x} \end{pmatrix} \tag{6}$$

oder

$$\begin{pmatrix} V_{0,x} \\ V_{0,y} \\ \dot{\varphi} \end{pmatrix} = \frac{1}{R_{1,x} - R_{2,x}} \begin{pmatrix} R_{1,x} - R_{2,x} & R_{1,y} & -R_{1,y} \\ 0 & R_{2,x} & R_{1,x} \\ 0 & 1 & -1 \end{pmatrix} \begin{pmatrix} V_{1,x} \\ V_{1,y} \\ V_{2,y} \end{pmatrix} \tag{7}$$

Konventionelle Beschleunigungssensoren messen absolute Beschleunigungen im relativen, fahrzeugfesten Koordinatensystem. D.h. in

$$\boldsymbol{a}_{abs} = B(t) A_{abs} \tag{8}$$

ist nur $\boldsymbol{A}_{abs}$ bekannt. Für die absolute Geschwindigkeit gilt dann

$$v(t + dt) = \int_{t}^{t+dt} a(\tau) d\tau + v(t)$$

$$= \int_{t}^{t+dt} B(\tau) A(\tau) d\tau + v(t) \tag{9}$$

Approximation des Integrals in (9) mit der Rechteckregel liefert

$$v(t + dt) = B(t + dt) A(t + dt) dt + v(t) \tag{10}$$

Diese Gleichung wird in das aktuelle, relative Koordinatensystem transformiert:

$$V(t + dt) = A(t + dt) dt + B^{-1}(t + dt) B(t) V(t) \tag{11}$$

Das Produkt der Transformationsmatrizen kann approximiert werden durch

$$B^{-1}(t + dt) B(t) \approx \begin{pmatrix} \cos(\dot{\varphi} dt) & \sin(\dot{\varphi} dt) \\ -\sin(\dot{\varphi} dt) & \cos(\dot{\varphi} dt) \end{pmatrix} \tag{12}$$

4

Bei der Integration von (11) und (12) über einen längeren Zeitraum sich ergebende Rechenfehler können dabei von Zeit zu Zeit abgeglichen werden. Der dafür sinnvolle zeitliche Abstand hängt von der Abtastrate und der Qualität der Informationen aus z.B. den Fahrdynamiksystemen, die Informationen über die Bewegung des Relativsystems im Absolutsystem liefern, ab.

Dadurch erhält man gegenüber reinen Beschleunigungssignalen besser interpretierbare Relativgeschwindigkeits- bzw. Verschiebungsmuster, mit welchen dann die einzelnen Crasharten einfacher dedektiert und voneinander unterschieden werden können. So könnte der Ort und die Relativgeschwindigkeit des Sensors mit der größten Relativbewegung mit Auftreffort und Auftreffrichtung des Gegners in Verbindung gebracht werden. Die Crashklassifizierung aufgrund der unterschiedlichen Verschiebungsmuster könnte dann beispielsweise mit Künstlichen Neuronalen Netzen erfolgen.

**Patentansprüche**

1.    Verfahren zum Bestimmen der Schwere und des Verlaufs eines Fahrzeugzusammenstoßes, mit mehreren Crash-Sensoren, die an verschiedenen Stellen des Fahrzeugs angeordnet sind und deren Ausgangssignale einer Auswerteeinheit zugeführt werden, dadurch gekennzeichnet, daß die Ausgangssignale der Crash-Sensoren auf ein Koordinatensystem bezogen werden, das bzgl. des Fahrzeugs invariabel ist und daß aus den Ausgangssignalen Aussagen über die Bewegung der Sensororte bzgl. des Koordinatensystems gewonnen werden.

2.    Verfahren nach Anspruch 1, dadurch gekennzeichnet, daß das Koordinatensystem in seiner Lage und in seiner Bewegung durch im Fahrzeug angeordnete Sensoren bestimmt ist.

3.    Verfahren nach Anspruch 2, dadurch gekennzeichnet, daß die Sensoren primär zur Bestimmung der Fahrzeugdynamik dienen.

4.    Verfahren nach Anspruch 2, dadurch gekennzeichnet, daß die Sensoren zumindest teilweise die Crash-Sensoren selbst sind.

5.    Verfahren nach einem der Ansprüche 1 bis 4, dadurch gekennzeichnet, daß aus den Ausgangssignalen der Crash-Sensoren Aussagen über den Auftreffpunkt eines anderen Objekts gewonnen werden.

6.    Verfahren nach einem der Ansprüche 1 bis 5, dadurch gekennzeichnet, daß aus den Ausgangssignalen der Crash-Sensoren Aussagen über die Auftreffrichtung eines anderen Objekts gewonnen werden.

7.    Verfahren nach einem der Ansprüche 1 bis 6, dadurch gekennzeichnet, daß aus den Ausgangssignalen der Crash-Sensoren Aussagen über die Auftreffgeschwindigkeit eines anderen Objekts gewonnen werden.

8.    Verfahren nach einem der Ansprüche 1 bis 7, dadurch gekennzeichnet, daß aus den Ausgangssignalen der Crash-Sensoren Aussagen über die kinetische Energie eines anderen Objekts gewonnen werden.

Fig.1: Relatives, fahrzeugfestes Koordinatensystem